# EUROPEAN PATENT APPLICATION

(11) **EP 0 970 977 A1**
(43) Date of publication of application: **12.01.2000**
(21) Application number: 98202236.0
(22) Date of filing: 06.07.1998
(51) Int. Cl.: C08F 290/00, C08F 20/36

(54) **Polymers of acrylic esters containing amide groups**

(71) Applicant: DSM N.V., 6411 TE Heerlen (NL)
(72) Inventor: van Benthem, Rudolfus Antonius Theodorus Maria, 6141 BR Sittard (NL); Jansen, Johan Franz Gradus Antonius, 6165 AP Geleen (NL); Dias, Aylvin Jorge Angelo Athanasius, 6221 JD Maastricht (NL)

(57) **Abstract**

The invention relates to a polymer (for example (I)) having at least one group derived from a carboxylic ester of a hydroxyalkylamide group, in which the carboxylic ester is derived from an α,β-ethylenically unsaturated carboxylic acid and a radiation curable composition comprising this polymer.

A coating composition comprising this composition has a high rate of polymerisation and shows the desired chemical and mechanical properties.

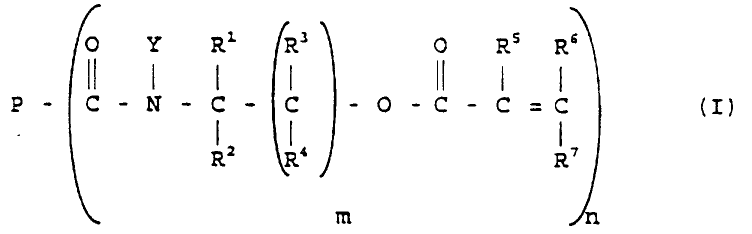

## Description

The invention relates to a polymer, a radiation-curable compound comprising this polymer and a composition comprising this compound.

During radiation curing processes the transformation of the fluid applied film to a solid crosslinked network can be considered to progress through three distinct stages being induction, polymerisation and attainment of maximum cure plateau. (Chemistry and Technology of UV and EB formulations, Volume IV, Oldring, 1991, pages 8-12).

Factors which improve or inhibit cure rate are, for example, the lamp system (UV-dose, intensity, wavelength, IR-content) and the chemical system (reactivity, absorption, coating weight, pigmentation, temperature, oxygen inhibition and substrate).

For commercial coating operations, it is necessary that the coating achieves a tackfree surface within seconds or less, because the interval between application of the coating and stacking or rewinding of the coated substrate is very short. Failure of the coating to achieve a non-tacky surface in this brief interval will result in the layers of coated substrate (in a stack or roll) sticking together ("blocking).

It is the object of the present invention to provide a coating composition having a high cure rate or rate of polymerisation and having the desired chemical and mechanical properies.

The radiation curable compound according to the invention comprises a polymer having at least one group derived from a carboxylic ester of a hydroxyalkylamide group in which the carboxylic ester is derived from an α,β-ethylenically unsaturated carboxylic acid.

The invention is also directed to this polymer.

Suitable hydroxylamides are for example β-hydroxyalkylamide, γ-hydroxyalkylamide, δ-hydroxyalkylamide and ε-hydroxyalkylamide.

Preferably, the hydroxylamide is β-hydroxyalkylamide.

A composition based on the compound according to the invention results in high maximum polymerization rates.

According to a preferred embodiment of the invention the functionalized polymer is according to formula (I): 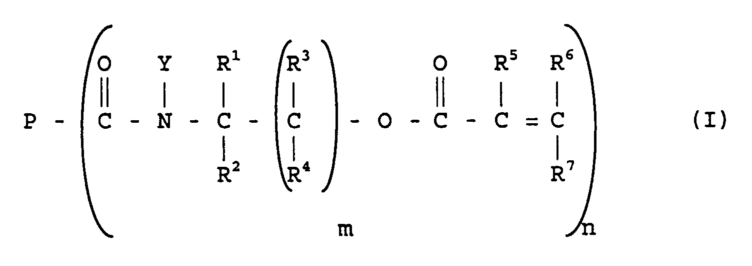 where:
- P: = polymer
- Y: = hydrogen, an (C₁-C₈) alkyl group or 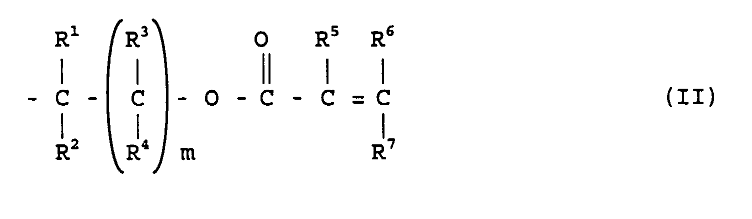
- R¹, R², R³, R⁴: are, identical or different,
hydrogen or a lineair, branched or cyclic (C₁-C₈) alkyl chain,
- R⁵: = hydrogen, (C₁-C₅)alkyl, -CH₂OH or CH₂COOX,
- R⁶,R⁷: = hydrogen, (C₁-C₈) alkyl, (C₆-C₁₀)aryl or COOX
- X: = hydrogen or (C₁-C₈) alkyl,
- n: = 1-1000 and
- m: = 1-4.

R¹, R² or R³ may form part of a cycloalkyl group.

Preferably, Y is hydrogen or methyl.

More preferably, y is hydrogen

Preferably, R¹, R², R³ and R⁴ are hydrogen or methyl.

More preferably R¹, R² and R³ are hydrogen.

R⁵ is preferably hydrogen or (m)ethyl.

R⁶ and R⁷ are preferably hydrogen.

Preferably n = 1-100, more preferably n = 2-20.

Preferably m = 1-2, more preferably m = 1.

Suitable polymers P are, for example, addition polymers and condensation polymers. These polymers can be, for example, linear polymers, branched polymers, comb polymers, star polymers, ladder polymers, dendrimers and hyperbranched polymers.

Suitable addition polymers P include polymers derived from monomers such as for example (meth)acrylate, acrylamide, styrene, ethylene, propylene, maleic acid, cyanoacrylate, vinylacetate, vinylether, vinylchloride, vinylsilane and mixtures thereof.

Suitable condensation polymers P include, for example, polyesters, polylactones, polyamides, polyesteramides, polyethers, polyesterethers, polyurethanes and polyurethane-urea.

Suitable linear polymers P include, for example, polyethers derived from diols, polyethylene, poly-MMA, polyesters derived from diols and difunctional acids and/or mono-hydroxy acids.

Suitable branched polymers P include, for example, polyethers comprising at least one trifunctional alcohol unit, polyesters comprising at least one tri- or tetrafunctional alcohol unit and/or one tri/tetra-functional acid unit.

Suitable dendrimers are disclosed in for example EP-A-575596, EP-A-707611, EP-A-741756, EP-A-672703, Angew. Chem. Int. Ed. Eng. 1994, 33, 2413, Angew. Chem. Int Ed. Eng. 1990, 29, 138, Angew. Chem. Int. Ed. Eng. 1993, 32, 1308 and Angew. Chem. Int. Ed. Eng. 1992, 31, 1200.

Suitable hyperbranched polymers include, for example, condensation polymers containing β-hydroxyalkylamide groups and having a weight average molecular mass of ≥ 800 g/mol. The polymers can comprise at least two groups according to formula (II): 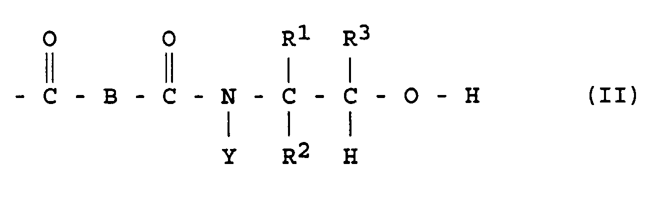 in which 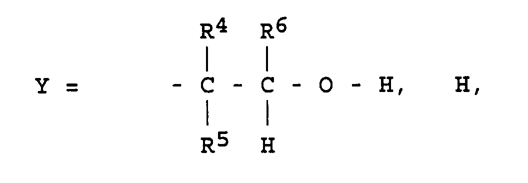 (C₁-C₂₀) (cyclo)alkyl or (C₆-C₁₀) aryl,
- B: = (C₂-C₂₀), optionally substituted, aryl or (cyclo)alkyl aliphatic diradical, and
- R¹, R², R³, R⁴, R⁵ and R⁶: may, independently of one another, be the same or different, H, (C₆-C₁₀) aryl or (C₁-C₈) (cyclo)alkyl radical.

Other examples of suitable hyperbranched polymers are disclosed in WO-A-9612754, WO-A-9613558, WO-A-9619537 and WO-A-9317060.

Between P and the functional group a connecting group S can be present:

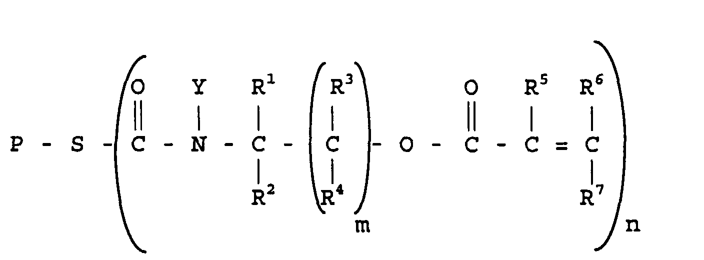

A suitable group S includes, for example, an alkyl, oxyalkyl, urethanealkyl, ureaalkyl carboxyalkyl, aminoalkyl or amidoalkyl group.

The functionalised polymer according to formula (I) can be obtained, for instance, by an esterification reaction between a hydroxyalkylamide units containing polymer and an unsaturated carboxylic acid, at a temperature between, for example, 80°C and 140°C.

The hydroxyalkylamide unit can be in the chain, in a side-chain or at the end of the polymer.

Preferably, 1 - 1.5 mol of acid are used per mole of hydroxide.

Preferably, the reaction takes place in the presence of an organic solvent, such as, for example, xylene, toluene or tetrahydrofuran.

Preferably, the reaction takes place in the presence of a stabilizing compound which prevents polymerization of the unsaturated ester groups under the conditions used for effecting this reaction. The stabilising compound or a mixture of stabilising compounds is generally used in amounts between about 50 and about 2000 ppm and preferably between 75 and 1000 ppm. They can be used in aerobic or anaerobic conditions depending on the stabilising compound.

Suitable stabilizing compounds include, for example, hydroquinone, monomethylhydroquinone, anthraquinone, β-nitrostyrene, phenothiazine and 2,6-di-tert-butyl-4-methyl-phenol (BHT).

The esterification reaction may take place in the presence of a catalyst. Suitable catalysts include strong acids, for example, sulphur-containing organic acids like alkane sulphonic acids and methane sulphonic acid.

Suitable unsaturated carboxylic acids include, for example, (meth)acrylic acid and derivatives, crotonic acid, (semi-ester of) itaconic acid, maleic acid, citraconic acid, mesaconic acid and fumaric acid. Preferably (meth)acrylic acid is applied.

The functionalised polymer can also be obtained by the reaction between a hydroxyalkyl amide and an unsaturated carboxylic acid chloride, anhydride or ester or a reaction between an oxazoline containing polymer and an unsaturated carboxylic acid.

The reaction between the amide and the unsaturated chloride or anhydride preferably takes place at temperature between 0°C and 30°C in a solvent in the presence of a base. Suitable solvents include, for example, tetrahydrofuran, water, dichloromethane or diethylether. Suitable bases include, for example, pyridine or triethylamine.

Suitable chlorides, anhydrides or esters include the chlorides, anhydrides and esters of the in the foregoing mentioned carboxylic acid.

The reaction between the amide and the unsaturated ester, preferably, takes place at temperatures between 80°C and 140°C in the presence of a Lewis acid.

Preferably, an excess of the unsaturated ester is applied. The ester functions both as solvent and as reactant.

Suitable Lewis acids are, for example, tetra alkyl titanate and sulphuric acid.

Suitable unsaturated carboxylic acids include, for example, (meth)acrylic acid and derivatives, crotonic acid, (semi-ester of) itaconic acid, maleic acid, citraconic acid, mesaconic acid and fumaric acid. Preferably, methacrylic acid and acrylic acid are used.

The functionalised polymer can be cured by means of a free-radical reaction. In these reactions the free radicals can be obtained by irradiation of the functionalised polymer in the presence of a photo-initiator.

Radiation-curing preferably takes place by means of, for example, a photochemical process such as, for example, ultraviolet radiation (UV) or a radiation-chemical process such as electron beam (EB).

UV and EB radiation are explained in greater detail by for example Bett et al. in the article entitled "UV and EB curing" (Jocca 1990 (11), pages 446 - 453).

The amount of the functionalized polymer according to the invention can range between 0,01% by weight and 100% by weight in the composition according to the invention.

Generally, the radiation curable composition according to the invention is substantially solvent free.

The composition according to the invention can be used, for example, in coating compositions, inks and adhesives.

If desired and depending on the application, the functionalised polymer can be combined with oligomers or monomers which are based, for example, on (meth)acrylate units, maleate units, fumarate units, itaconate units, vinylester units and/or vinylether units.

After curing the coatings according to the invention have many desired properties such as for example good chemical properties (resistance to solvents, acids, alkalis and moisture), good optical properties and appearance, good mechanical properties (such as hardness, flexibility, adhesion, abrasian resistance, strength and durability), good thermal stability and good weatherability.

The composition comprising the radiation curable binder composition may further comprise pigments, stabilisers and other additives.

A radiation curable formulation generally consists of a prepolymer, a reactive diluent and additives. Two other possible components, depending upon the type of formulation and cure mechanism are pigments and photoinitiator system.

The composition can for example be applied in a water based coating composition, in a solvent based coating composition, in a high solids coating composition, in a 100% solids coating and in a powder paint composition.

The most preferred irradiation source is ultraviolet light. Ultraviolet light is preferably high intensity light to provide a dosage to achieve reasonable curing rates. In the event that lower energy light is to be applied, it may then be desired to subject the compositions also to elevated temperatures in order to reduce the time for adequate polymerization to occur.

With respect to UV curing equipment we refer to, for example, pages 161-234 of Chemistry and Technology of UV and EB-formulations, Volume 1, Oldring, 1991.

Suitable lamps employed to provide the desired high intensity and availability of wavelength and spectral distribution include for example that available from Fusion Systems, Corp.

A composition according to the present invention can be applied on substrates such as, for example, plastic, paper, board, leather, glass, wood and metal.

This composition is preferably polymerised in the presence of a photoinitiator but it is also possible to polymerise in the absence of a photoinitiator.

Suitable photoinitiators allow for initiation of the curing process with exposure to light having wavelengths between about 200 nm and about 600 nm. Suitable photoinitiators have ketone functionalities and can be aromatic such as, for example, benzophenone. Darocur 1173® (Ciba) is a suitable benzyl-ketal-based photoinitiator, which contains 2-hydroxy-2-methyl-1-phenylpropane-1-one as an active component. Irgacure 184® (Ciba) is an aryl ketone containing hydroxycyclohexyl phenyl ketone as active component, and is a suitable photoinitiator. Irgacure 369® (active component 2-benzyl-2-dimethylaminol-1-(4-morpholinophenyl)-butanone-1) is also suitable. Acyl phosphines, such as for example 2,4,6,-trimethylbenzoyl diphenyl phosphone oxide (Lucerine TPO®, BASF) can also be used, as can Quantacure CPTX® (Octel Chemicals), which contains 1-chloro-4-propoxy thioxanthone as active component. Chemical derivatives of these photoinitiators are suitable, as are mixtures of these photoinitiators. A suitable combination of photoinitiators is Irgacure 1800™ (Ciba) consisting of 75% by weight Irgacure 184™ and 25% by weight (bis-(2,6-dimethoxy benzoyl)-2,4,4-trimethylpentyl fosfine oxide). Other suitable photoinitiators can be of the Norrish-II-type, for example, the combinations benzophenone with amine, maleimide with amine, thioxantone with amine and antrachinon with amine.

The invention is explained by reference to the following non-restrictive examples.

### Example I

### Synthesis of resin I

A reaction mixture consisting of 20.1 gram of hydroxy ethyl methacryl amide, 40.3 gram of 2-ethylhexyl acrylate, 40.0 gram of isodecyl acrylate and 6.2 gram of tert-butylperoxy-2-ethylhexanoate was slowly added during 2.5 hours to 140 grams of heated butanone in a roundbottom flask equipped with stirrer, reflux condenser, thermometer and nitrogen inlet, at reflux. Subsequently a solution of 2.6 gram tert-butylperoxy-2-ethylhexanoate in 29.1 gram butanone was added over a period of 1 hour. Charcoal was added to the hot polymer solution and the solution was filtered over Celite® 521. After evaporation of the solvent an hydroxy amid functional polymer with an hydroxy value of 30 meq KOH per gram was obtained.
10,4 grams of acryloylchloride were slowly added to a stirred solution of 100 grams of the hydroxy amid functional polymer prepared above and 12,4 grams of pyridine in 200 ml of dry tetrahydrofurane at 0-5°C. The temperature was maintained below 5°C. After the addition the temperature was slowly raised to roomtemperature and the reaction mixture was stirred at this temperature for 18 hours.
The reaction mixture was filtered to remove the pyridine-HCl salt, washed with a saturated sodium carbonate solution, washed with water, dried over sodium sulphate and subsequently the solvent was evaporated to yield an acrylic functional resin (resin I)

### Example II

### Synthesis of resin II

390 g molten hexahydro phtalic anhydride (60°C) were added to 455 g molten diisopropyl amine in a 1.5 l reaction flask under nitrogen at 70°C. After the addition, which was followed by an exotherm reaction, the reaction temperature was raised to 180°C and the reaction mixture was stirred at 180°C for 3 hours. Subsequently the pressure was reduced from atmospheric to 20 mbar and the reaction was continued for one additional hour after which a hyperbranched polymer containing β-hydroxyamid endgroups with the following properties was obtained: Mn= 1160, dispersity D= 2.1, Tg= 57.5°C and a hydroxy value of 365 meq KOH per gram.
To this resin 446 g methacrylic acid and 0.4 g phenothiazine were added. Dry air was bubbled through the reaction mixture after which the reaction mixture was heated to 110°C for 6 hours. Subsequently the pressure was reduced to 20 mbar and a small amount of methacrylic acid was distilled off after which a methacylic functional polymer (resin II) with the following properties: Mn= 1800, D= 2.0, weight per unsaturation (wpu)= 260 and a hydroxy value of 60 meq KOH per gram was obtained.

### Example III

### Curing of a coating comprising resin I

50 mg Darocure 1173™ were dissolved in 5 g resin I. A 100 µm thick film of this mixture was applied on a glass plate and subsequently cured under nitrogen with a total dose of 1 J/cm² (lamp: Fusion F600 equipped with a D-Bulb). After irradiation a cured coating was obtained. With the acetone double rub test the coating could withstand 100 acetone double rubs without being affected.

### Example IV

### Curing of a coating comprising resin I and laurylacrylate

5 g of resin I were dissolved in 2.4 g laurylacrylate to which 74 mg Irgacure 184™ were added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Example V

### Curing of a coatings comprising resin II and methyl methacrylate

5 g of resin II were dissolved in 1.9 g methylmethacrylate to which 69 mg Irgacure 184™ was added. A 100 µm thick film was applied of the resulting solution on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Example VI

### Curing of a coating comprising resin II and isodecyl acrylate

5 g resin II were dissolved in 4.1 g isodecylacrylate to which 91 mg Irgacure 184™ were added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Experiment VII

### Curing of a coating comprising resin II and triethylene glycol divinyl ether

5 g resin II were dissolved in 1.9 g triethylene glycol divinyl ether to which 69 mg Irgacure 184™ was added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Example VIII

### Curing of a coating comprising resin II and triethylene glycol di( monobutyl maleate)

5 g of resin II were dissolved in 4.4g triethylene glycol di( monobutyl maleate) to which 94 mg Irgacure 184™ was added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

These examples demonstrate that the UV-curable functional polymers according to the invention result in good coatings.

## Claims

1. A polymer having at least one group derived from a carboxylic ester of a hydroxyalkylamide group, in which the carboxylic ester is derived from an α,β-ethylenically unsaturated carboxylic acid.

2. Polymer according to Claim 1 having formula (I): 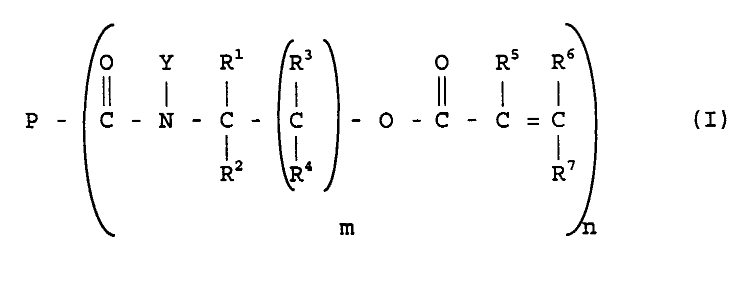 where:
P = polymer,
Y = hydrogen, an (C₁-C₈) alkyl group or 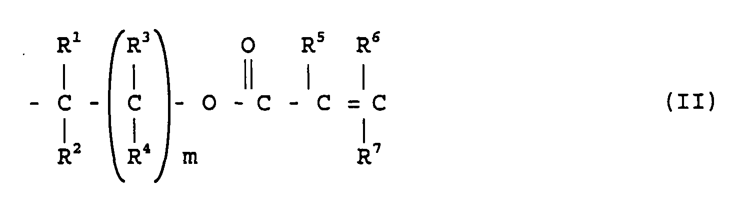
R¹, R², R³, R⁴ are, identical or different, hydrogen or a lineair, branched or cyclic (C₁-C₈) alkyl chain,
R⁵ = hydrogen, (C₁-C₅)alkyl, -CH₂OH or CH₂COOX,
R⁶,R⁷ = hydrogen, (C₁-C₈) alkyl, (C₆-C₁₀)aryl or COOX,
X = hydrogen or (C₁-C₈) alkyl,
n = 1-50 and
m = 1-4.

3. A radiation curable compound comprising a polymer having at least one group derived from a carboxylic ester of a hydroxyalkylamide group, in which the carboxylic ester is derived from an α,β-ethylenically unsaturated carboxylic acid.

4. Compound according to Claim 3 comprising a polymer having formula (I): 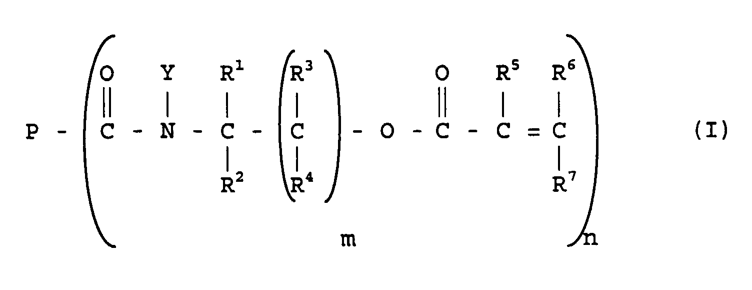 where:
P = polymer,
Y = hydrogen, an (C₁-C₈) alkyl group or 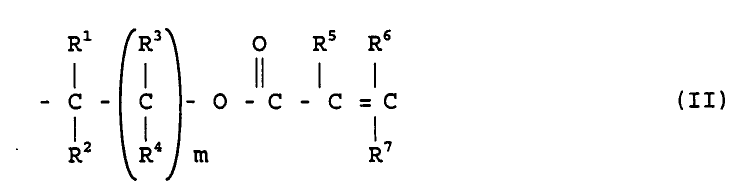
R¹, R², R³, R⁴ are, identical or different, hydrogen or a lineair, branched or cyclic (C₁-C₈) alkyl chain,
R⁵ = hydrogen, (C₁-C₅)alkyl, -CH₂OH or CH₂COOX,
R⁶,R⁷ = hydrogen, (C₁-C₈) alkyl, (C₆-C₁₀)aryl or COOX
X = hydrogen or (C₁-C₈) alkyl,
n = 1-50 and
m = 1-4.

5. Compound according to claim 4, characterized in that Y is hydrogen or methyl, R¹, R², R³ and R⁴ are hydrogen or methyl, R⁵ is hydrogen or (m)ethyl and R⁶ and R⁷ are hydrogen.

6. A radiation curable composition comprising a compound according to any one of Claims 3-5.

7. Coating obtained by radiation curing of a composition according to Claim 6.

8. Entirely or partly coated substrate wherein a coating according to Claim 7 is applied as the coating.
